# EUROPEAN PATENT APPLICATION

(11) **EP 3 266 555 A1**
(43) Date of publication of application: **10.01.2018**
(21) Application number: 15883940.7
(22) Date of filing: 04.03.2015
(51) Int. Cl.: B23K 20/00, B23P 6/00

(54) **METHOD FOR REPAIRING CAST STEEL MEMBER**

(71) Applicant: The Chugoku Electric Power Co., Inc., Hiroshima-shi, Hiroshima 730-8701 (JP)
(72) Inventor: NISHIDA, Hidetaka, Hiroshima-shi Hiroshima 730-8701 (JP); MATSUMURA, Hideo, Hiroshima-shi Hiroshima 730-8701 (JP); MORISHITA, Keiji, Hiroshima-shi Hiroshima 730-8701 (JP); ARAKAWA, Daisuke, Hiroshima-shi Hiroshima 730-8701 (JP)
(74) Representative: Osha Liang
(86) International application number: PCT/JP2015/056325
(87) International publication number: WO 2016/139772

(57) **Abstract**

An object of the present invention is to certainly repair a crack, which was formed on a surface of a cast steel member, on site.

The present invention is a repair method of a cast steel member (10) having a crack (12) formed on a surface (11) of the cast steel member, the repair method includes: recess forming (S2) to form a recess (13) having a wedge-shaped cross section that widens in a depth direction of the cast steel member (10) by cutting the cast steel member (10) from the surface (11) of the cast steel member (10) to a predetermined depth so as to include the crack (12); repair member embedding (S3) to push and embed a repair member 30 made of a metal material more flexible than the cast steel member (10) into the recess (13) formed in the recess forming (S2), the repair member (30) being able to be diffusion bonded to the cast steel member (10); and diffusion bonding (S4) the repair member (30) to the cast steel member (10) by heating a boundary (35) between an exposed surface of the embedded repair member (30) and the surface (11) of the cast steel member (10).

## Description

### Technical Field

The present invention relates to a method of repairing a crack formed on a surface of a cast steel member.

### Background Art

A cast steel member often used in thermal power equipment, nuclear power equipment, or the like are kept at high temperature and high pressure conditions for a long time and suffer creep damage due to thermal stress. In view of this, the crack formed on the surface causes breakage. Thus, various repair methods have been proposed.

For example, Patent Literature 1 discloses as a repair method of a gas turbine or the like with nickel-base superalloy, a method that mixes cobalt-base braze alloy including boron and the like, cobalt-base wear-resistant alloy, and the like to form a powder mixture for sintering, removes a surface part of the turbine, diffusion bonds the above-described sintering formation, and disperses it.

### Citation List

### Patent Literature

Patent Literature 1: Japanese Patent Application Laid-open Publication No. 2006-188760

### Summary of Invention

### Technical Problem

However, many of the cast steel members such as a steam turbine room and a steam turbine valve in the above-described thermal power equipment, nuclear power equipment, or the like are formed large. Such cast steel members cannot be transported back to the plant for heat treatment. Therefore, the heat treatment has to be performed on site. However, the scale of the heat treatment which can be performed on site is limited, and this sometimes leads to imperfect repair. In such a case, the following situation possibly arises; the situation that sometime after the repair, a crack is formed again at a repair position or at the proximity of the repair position, and then the repair has to be performed again.

The present invention has been made under these circumstances, and an object of the present invention is to provide a repair method of a cast steel member that certainly repairs on site a crack which was formed on a surface of the cast steel member.

### Solution to Problem

An aspect of the present invention to achieve the above-described object is a repair method of a cast steel member having a crack formed on a surface of the cast steel member, the repair method including:
recess forming to form a recess having a wedge-shaped cross section that widens in a depth direction of the cast steel member by cutting the cast steel member from the surface of the cast steel member to a predetermined depth so as to include the crack;
repair member embedding to push and embed a repair member made of a metal material more flexible than the cast steel member into the recess formed in the recess forming, the repair member being able to be diffusion bonded to the cast steel member; and
diffusion bonding the repair member to the cast steel member by heating a boundary between an exposed surface of the embedded repair member and the surface of the cast steel member.

As in the present invention, forming the recess such that the cast steel member is cut from the surface by the predetermined depth, embedding the repair member into the recess, and diffusion bonding the embedded repair member to the cast steel member certainly ensure the bonding of the repair member to the cast steel member on a work site without large thermal treatment equipment and without a large amount of heat. By using the repair member made of the metal material more flexible than the cast steel member, the repair member allows thermal stress applied to a part into which the repair member is embedded to circumferentially escape. This can effectively prevent recurrence of the crack from the repair part. Furthermore, the formed cross section of the recess of the cast steel member has the wedge-shaped cross section that widens in the depth direction from the surface of the cast steel member. Embedding the repair member into such a recess can make the embedded repair member unlikely to come out from the recess.

Thus, the repair method of the cast steel member of the present invention certainly ensures the repair of the crack, which was generated on the surface of the cast steel member by the thermal stress, on site.

According to another aspect of the present invention, the repair member embedding includes flux introducing to introduce a flux to the repair member or the recess, the flux reducing an interfacial tension of a contact surface of the repair member and the recess.

As in the present invention, reducing the interfacial tension of the contact surface between the repair member and the recess such that the flux is introduced to the repair member or the recess ensures the diffusion bonding of the repair member to the cast steel member with more certainty.

According to another aspect of the present invention, the diffusion bonding heats the boundary so as to make a heated region of the exposed surface of the repair member broader than a heated region of the surface of the cast steel member.

The diffusion bonding, which is a bonding method using plastic deformation by heat of a bonded member, as in the present invention, ensures the bonding of the repair member to the cast steel member with more certainty such that the heated region of the surface of the repair member, which easily plastically deforms by heat is made broader than the heated region of the surface of the cast steel member.

According to another aspect of the present invention, the repair member embedding includes extra fill polishing to polish an extra fill formed on a surface layer of the repair member by pushing in the repair member.

As in the present invention, polishing the extra fill formed on the surface layer of the repair member ensures the smooth surface of the cast steel member after the repair.

According to another aspect of the present invention, the repair member is selected from argentum or aluminum.

As in the present invention, using the metal that plastically deforms by heat, and argentum or aluminum having enough strength, as the repair member, ensures sure diffusion bonding.

### Advantageous Effects of Invention

According to the present invention, a crack that was formed on a surface of a cast steel member can be certainly repaired on site.

### Brief Description of Drawings

Fig. 1 is an explanatory view of a shell member of a steam turbine wheel chamber.
Fig. 2 is an explanatory flowchart of a procedure of a repair method of the embodiment.
Fig. 3 is enlarged view of a crack 12 in plan view.
Fig. 4 is an upward perspective view illustrating a shape of a recess 13.
Fig. 5 is a front view of the recess 13 such that the recess 13 is cut off in a vertical direction along a straight line P-Q parallel to a crack lateral direction.
Fig. 6 is a side view of the recess 13 such that the recess 13 is cut off in the vertical direction along a straight line R-S parallel to a crack longitudinal direction.
Fig. 7 is a view illustrating an exemplary shape of a repair member 30.
Fig. 8 is an explanatory view of a repair method with the repair member 30.
Fig. 9 is an explanatory view of the repair method with the repair member 30.
Fig. 10 is an explanatory view of a method for polishing an extra fill 34.
Fig. 11 is an explanatory view of a method of diffusion bonding.
Fig. 12 is an explanatory view of a positional relation of a rotating portion 41 of a bonding jig 40, and a shell member 10 and the repair member 30 that are brought into contact with the rotating portion 41.
Fig. 13 is a view illustrating an exemplary shape of a repair member 50.
Fig. 14 is an explanatory view of a repair method with the repair member 50.
Fig. 15 is an explanatory view of the repair method with the repair member 50.
Fig. 16 is an upward perspective view illustrating another exemplary shape of the recess 13.

### Description of Embodiments

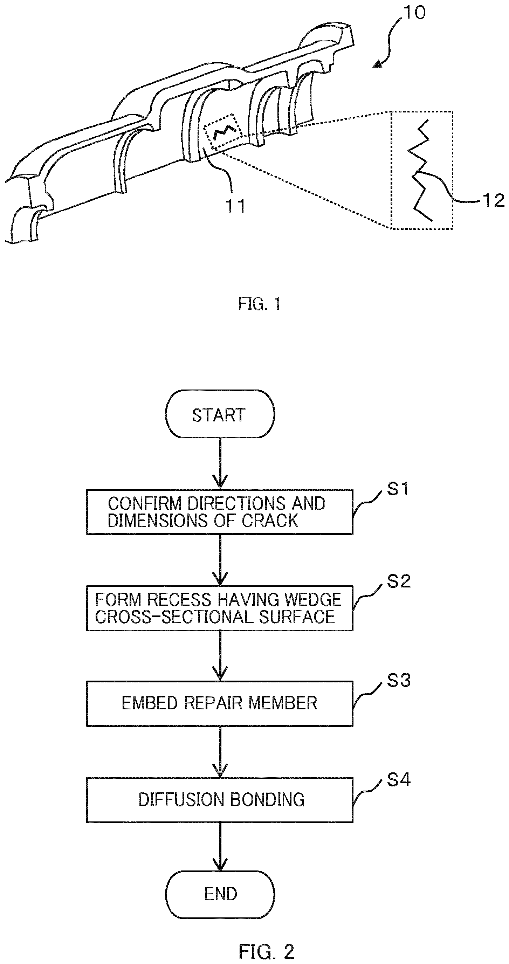

A repair method of a cast steel member according to the present embodiment can be applied to repair of a crack formed to a cast steel member due to thermal stress and, for example, can be applied to a shell member 10 of a steam turbine wheel chamber provided to thermal power equipment, nuclear power equipment, or the like, as shown in Fig. 1.

The shell member 10 of the steam turbine wheel chamber is made of, for example, CrMoV cast steel and is subject to thermal stress that is accompanied by the start-stop operation of the shell member 10. Hereby, the shell member 10 will suffer creep damage so that a crack 12 will be formed to the inner surface 11. The crack 12 will appear in, for example, a zigzag form as shown in Fig. 1. The following describes a method of repairing a cast steel member, with the shell member 10 having the surface 11 to which the crack 12 is formed as an exemplary cast steel member.

Fig. 2 is an explanatory flowchart of a procedure of the repair method of the present embodiment. As shown in Fig. 2, the repair method of the present embodiment includes the following. First, directions and dimensions of the crack 12 are confirmed (hereinafter referred to as crack confirmation S1). Next, the shell member 10 is cut from its surface by a predetermined depth so as to include this crack 12 to form a recess (hereinafter referred to as recess forming S2). Next, a repair member is embedded into this recess (hereinafter referred to as repair member embedding S3). Then, the embedded repair member is bonded to the shell member 10, which is a base material, by diffusion bonding (hereinafter referred to as diffusion bonding S4). The following describes the above in detail.

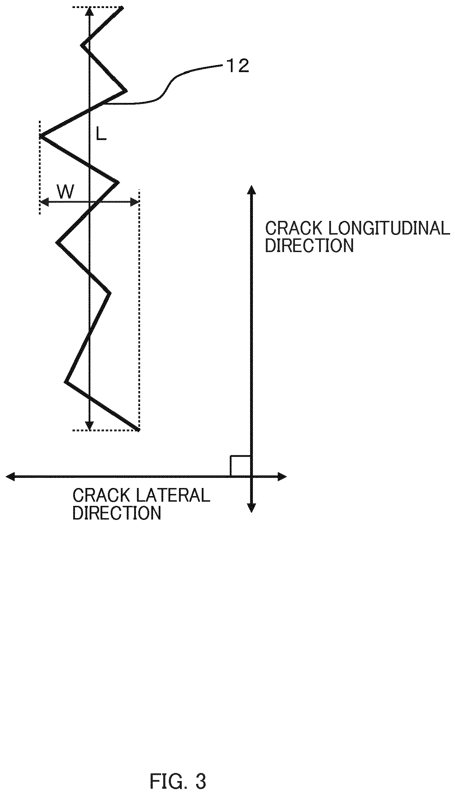

First, the crack confirmation S1 will be described. Fig. 3 is an enlarged view of the crack 12 in plan view. As shown in Fig. 3, for the crack 12, the longitudinal direction of the crack 12 and the lateral direction of the crack 12 being the direction orthogonal to the longitudinal direction are determined. Thereafter, the length of the crack 12 in the longitudinal direction of the crack 12 and the length of the crack 12 in the lateral direction of the crack 12 are measured with a caliper or the like.

The length in the longitudinal direction of the crack 12 (hereinafter referred to as a crack longitudinal direction) is usually approximately 5 mm to 100 mm and the length in the lateral direction of the crack 12 (hereinafter referred to as a crack lateral direction) is usually approximately 0.1 mm to 10 mm. For the sake of description, in the present embodiment, as shown in Fig. 3, the length along the crack longitudinal direction is set to L and the length along the crack lateral direction is set to W. This crack 12 also develops in a depth direction, although not shown in Fig. 3.

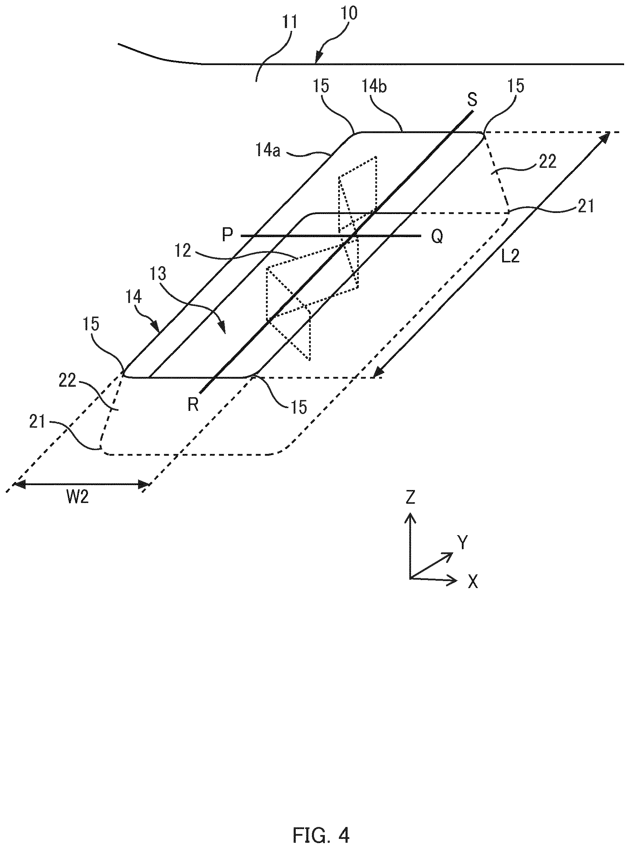

Next, the recess forming S2 will be described. Fig. 4 is an upward perspective view illustrating a shape of a recess 13 formed by the recess forming S2. As shown in Fig. 4, the recess 13 is created on the surface 11 of the shell member 10 taking a rectangular-shaped cutting line 14 (14a and 14b) disposed to surround a surface of the crack 12 as a base line. Then, the recess 13 is formed such that the shell member 10 is cut from this cutting line 14 along a widening direction in the depth direction.

The recess 13 is specifically created as below. First, the cutting line 14 is slit, to surround the surface of the crack 12, on the surface of the shell member 10 with a cutter or the like. At this time, the cutting line 14 is configured to have four corners, corner portions 15, having rounded corners. The length of the side 14a in the longitudinal direction of the cutting line 14 is usually approximately 1 mm to 120 mm, and the length of the side 14b in the lateral direction of the cutting line 14 is usually approximately 1 mm to 30 mm. In the present embodiment, for the sake of description, the length of the side 14a in the longitudinal direction of the cutting line 14 is set to L2, and the length of the side 14b in the lateral direction of the cutting line 14 is set to W2.

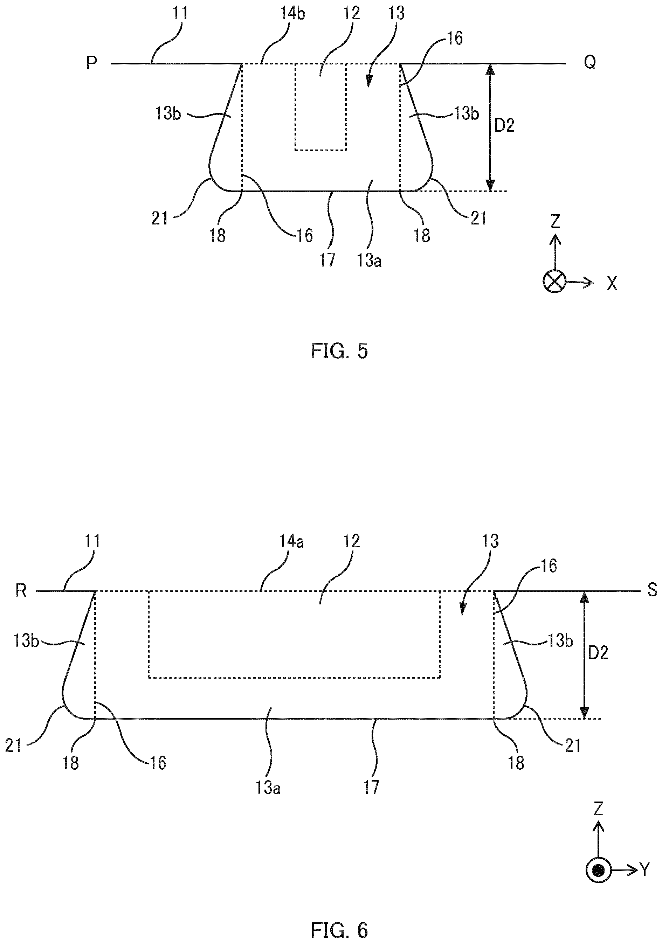

Next, based on the cutting line 14, the shell member 10 is cut from the surface 11 in the depth direction. Here, Fig. 5 is a cross-sectional view of the recess 13 such that the recess 13 is cut off in a vertical direction along a straight line P-Qparallel to the crack lateral direction, and Fig. 6 is a cross-sectional view of the recess 13 such that the recess 13 is cut off in the vertical direction along a straight line R-S parallel to the crack longitudinal direction (in both Fig. 5 and Fig. 6, the description of the crack 12 is simplified to be indicated by dotted lines) . As shown in Fig. 5 and Fig. 6, the recess 13 is divided into a groove 13a that is a rectangular-parallelepiped-shaped space and a bulge 13b that is a space outside the groove 13a. The recess 13 is created such that the groove 13a and the bulge 13b are formed in order. A tool such as a drill and an end mill is used for forming (cutting) the recess 13.

First, as shown in Figs. 5 and 6, the shell member 10 is cut vertically downward taking the cutting line 14 as the base line to form a side surface 16. Further, an inside part of the side surface 16 is cut to form the groove 13a, which is the rectangular-parallelepiped-shaped space.

Here, the cutting depth of the groove 13a is a depth considered to be satisfactorily deeper than a maximum depth of the crack 12, thus removing the crack 12. This depth is usually approximately 1 mm to 100 mm. When the maximum depth of the crack 12 cannot be expected, that is, when a developing degree of the crack 12 to the inside is unknown, the cutting is gradually repeated while confirming the presence/absence of the crack 12. In the present embodiment, for the sake of description, the cutting depth of the groove 13a is set to D2.

Subsequently, the bulge 13b is created. Specifically, as shown in Figs. 5 and 6, taking the cutting line 14 as the base line, the cutting tool is progressed toward a direction inclined outside a cutting surface of the side surface 16 of the groove 13a. Then, after the cutting depth reaches near the depth of a bottom surface 17 of the groove 13a, the cutting direction is gradually changed from the outside to the inside to perform the cutting to an edge portion 18 of the bottom surface 17. Thus, a curved surface 21 (a fillet) is formed below the bulge 13b.

As described above, the recess 13, which is constituted of the groove 13a and the bulge 13b, is formed. The recess 13 has a wedge-shaped cross section that widens in the depth direction from the surface 11 of the shell member 10. As shown in Fig. 4, the curved surface 21 formed on the bulge 13b is provided to the whole circumference of a bottom edge of the recess 13, thus forming all corners 22 of the recess 13 into curved surfaces.

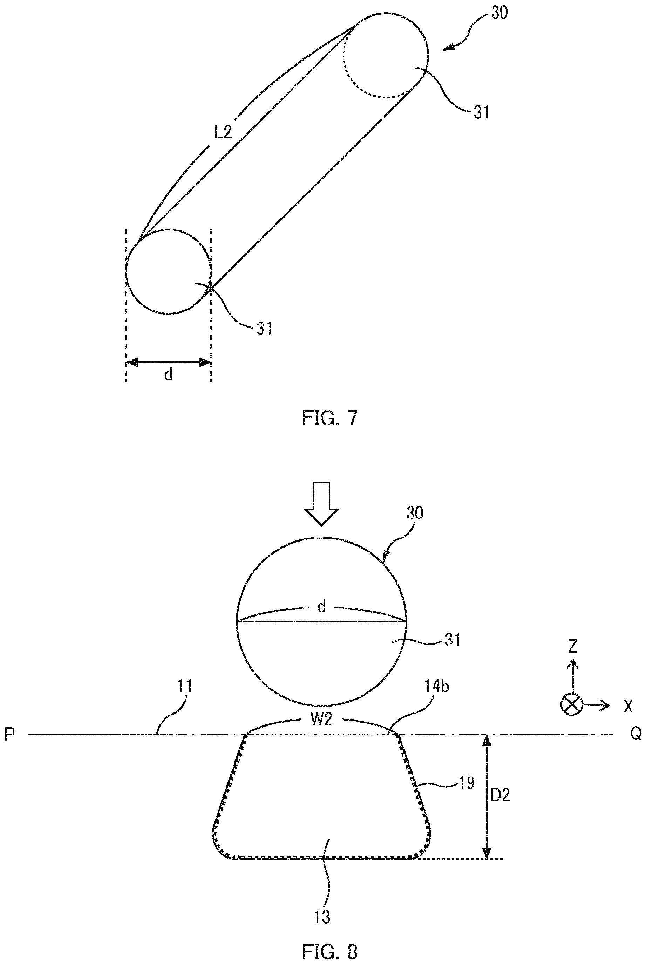

Next, the repair member embedding S3 will be described. In the repair member embedding S3, the recess 13 formed on the shell member 10 is repaired by the repair member. Fig. 7 is a view illustrating an exemplary shape of this repair member 30. As shown in Fig. 7, the repair member 30 is a column-shaped member having both end surfaces 31 in the longitudinal direction processed into circular shapes. The length in an axial direction of the repair member 30 is set to L2. The diameter of the end surface 31 is set to ***d***, which is slightly longer than the length W2 of the side 14b in the longitudinal direction of the cutting line 14. A specific dimension of ***d*** will be described later.

The repair member 30 is made of a metal material more flexible than the shell member 10, and is a material that allows diffusion bonding, which is described later, to the shell member 10. Such material includes argentum or aluminum, which easily plastically deforms by heat, or a metal having a tensile strength identical to that of argentum or aluminum.

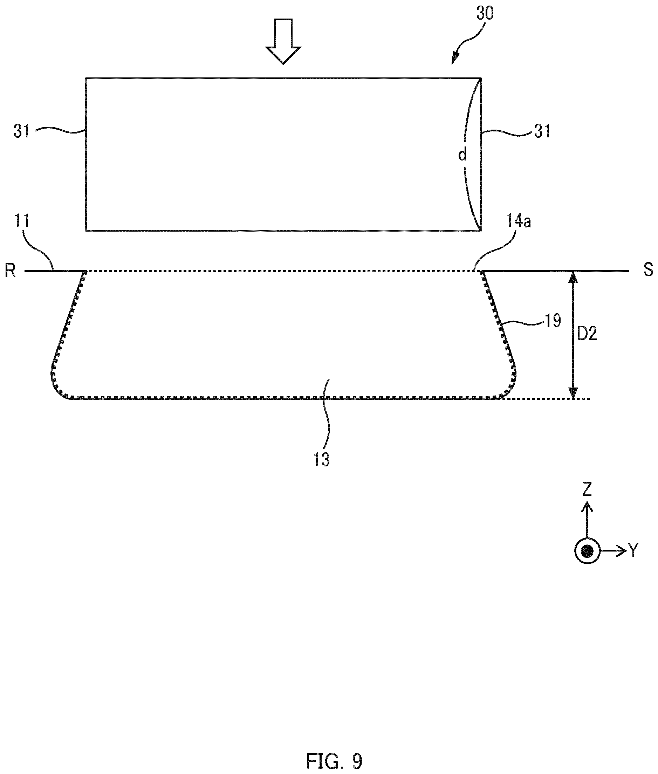

Figs. 8 and 9 are explanatory views of the repair method with the repair member 30. Fig. 8 is a front view of the recess 13 corresponding to Fig. 5. Fig. 9 is a side view of the recess 13 corresponding to Fig. 6. As shown in Figs. 8 and 9, the repair member 30 is embedded into the recess 13. Specifically, the repair member 30 is pushed into the recess 13 with the repair member 30 being hit from above with a hammer or the like in a state where the end surface 31 of the repair member 30 and the side 14b in the lateral direction of the cutting line 14 are aligned.

Here, the diameter ***d*** of the end surface 31 of the repair member 30 is slightly larger than the length W2 of the side 14b in the longitudinal direction of the cutting line 14 (that is, a short side of an opening surface of the recess 13). However, as described above, the repair member 30 is made of the metal material more flexible than the shell member 10, thus allowing the repair member 30 to be put inside the recess 13 with the repair member 30 being hit and deformed. In this process, the embedded part of the repairmember 30 deforms (plastically deforms) while approaching in a direction of the bulge 13b, as a result, ensuring filling of the entire repair member 30 into the recess 13.

From such a point, the volume of the repair member 30 is preferably adjusted to be identical to that of an occupied space of the recess 13, and the diameter ***d*** and the length L2 of the repair member 30 are preferably adjusted to be identical to the lengths of the recess 13. This can keep the surface 11 of the shell member 10 after the repair smooth.

In this case, the repair member 30 may be an elliptical-columnar-shaped member not a columnar-shaped member. For example, the length in the minor axis of the end surface 31 of the repair member 30 is set shorter than the length W2 of the side 14b in the lateral direction of the cutting line 14, and the length in the major axis of the end surface 31 is set longer than the length D2 in the depth direction of the recess 13 (the groove 13a). Then, the repair member 30 can be easily inserted into the recess 13 in a state where a minor axis direction of the end surface 31 is set to be horizontal and a major axis direction of the end surface 31 is set to be vertical. Afterwards, the repair member 30 can be filled into the entire recess 13 with the repair member 30 being hit from above to deform the repair member 30 to a side of the bulge 13b.

As described above, because the bottom edge of the recess 13 has the curved surfaces 21 and the corners 22 of the recess 13 are also formed into the curved surfaces, when the repair member 30 is embedded, the thermal stress can be prevented from locally concentrating to regenerate the crack from there. Because the corner portions 15 of the cutting line 14 (the recess 13) are also processed into the rounded corners, recurrence of the crack 12 on the surface 11 near the corner portions 15 can be prevented.

When the repair member is embedded into the recess 13, a flux 19 is applied over the surface of the repair member 30 or an inner surface of the recess 13 (may be applied over both of them). This flux 19 is a diffusion accelerator including, for example, calcium carbonate and calcium fluoride. When the diffusion bonding, which is described later, is performed, the flux 19 reduces an interfacial tension between the surface of the repair member 30 and the inner surface of the recess 13. This ensures the diffusion bonding between the repair member 30 and the shell member 10 with more certainty.

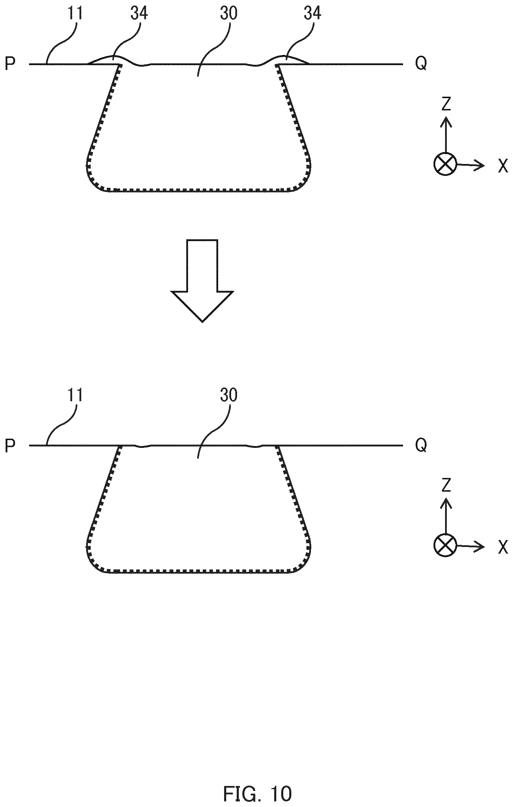

As described above, the repair member 30 plastically deforms after being embedded into the recess 13. As a result, an extra fill is sometimes generated on a surface layer. In such case, as shown in Fig. 10, an extra fill 34 is polished with a polishing tool to keep the boundary of the surface of the shell member 10 and the surface (exposed surface) of the repair member 30 flat. This can make the surface 11 of the shell member 10 after the repair smooth.

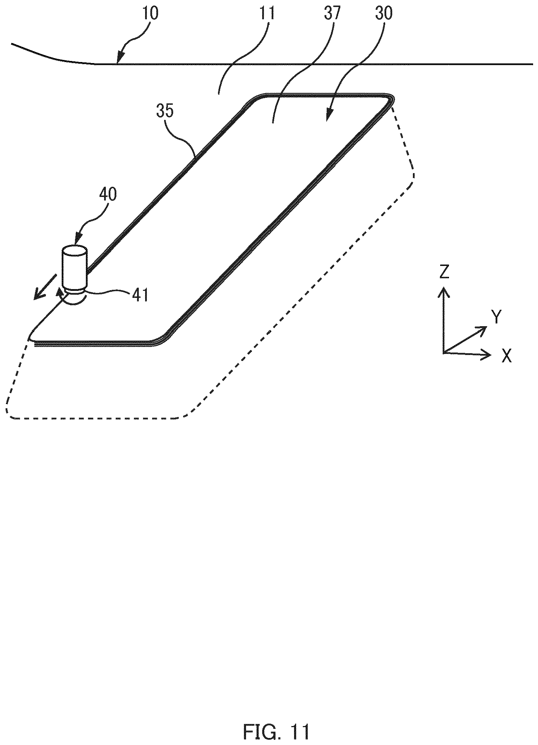

Last, the diffusion bonding S4 will be described. Fig. 11 is an explanatory view of a method of diffusion bonding. As shown in Fig. 11, the diffusion bonding is performed using a bonding jig 40. The bonding jig 40 has a lower portion on which a small disc-shaped rotating portion 41 is mounted (the diameter of the rotating portion 41 is, for example, approximately 20 mm). This rotating portion 41 is configured to be able to rotate at high speed (several hundred to several thousand rpm) concentrically with respect to a center of a circle of the main surface of the rotating portion 41. The diffusion bonding is performed such that while this rotating portion 41 is brought into contact with a boundary 35 of an outer surface 37 of the repair member 30 and the surface 11 of the shell member 10, the bonding jig 40 is run along the boundary 35 with the rotating portion 41 being rotated.

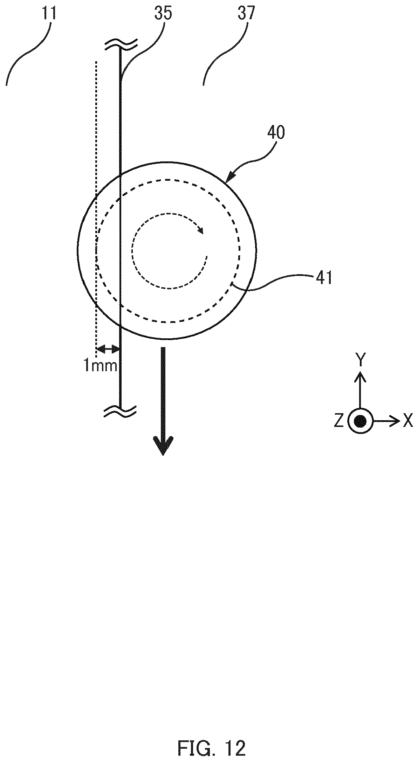

For the above-described boundary 35, the bonding jig 40 is preferably run so as to make a heated region of the outer surface 37 of the repair member 30 broader than a heated region of the surface 11 of the shell member 10. Specifically, for example, as shown in Fig. 12, the bonding jig 40 is run in a state where the rotating portion 41 is protruded to a side of the surface 11 of the shell member 10, for example, by approximately 1 mm. The diffusion bonding, which is a bonding method using plastic deformation by heat of a bonded member, ensures the bonding of the repair member 30 to the shell member 10 with more certainty such that the heated region of the outer surface 37 of the repair member 30, which easily plastically deforms by heat, is made broader than the heated region of the surface 11 of the shell member 10.

As described above, the repair method of the present embodiment certainly ensures the bonding of the repair member 30 to the shell member 10 without large equipment and without a large amount of heat such that the cast steel member such as the shell member 10 is cut from its surface by a predetermined depth to form the recess 13 (the recess forming S2), the repair member 30 is embedded into this recess (the repair member embedding S3), and this repair member 30 is diffusion bonded to the shell member 10 (the diffusion bonding S4). In the repair member embedding S3, using the member made of the metal material more flexible than the shell member 10 as the repair member 30 embedded into the recess 13 allows the thermal stress applied to a part into which the repair member 30 is embedded to circumferentially escape. This can prevent recurrence of the crack from the repair part.

Furthermore, in the recess forming S2, the cross section of the recess 13 of the shell member 10 has the wedge-shaped cross section that widens in the depth direction from the surface 11 of the shell member 10. The repair member 30 is embedded into such a recess 13 to make the embedded repair member 30 unlikely to come out from the recess 13.

Thus, the repair method of the present embodiment certainly ensures the repair on site of the crack which was generated on the surface of the cast steel member by the thermal stress.

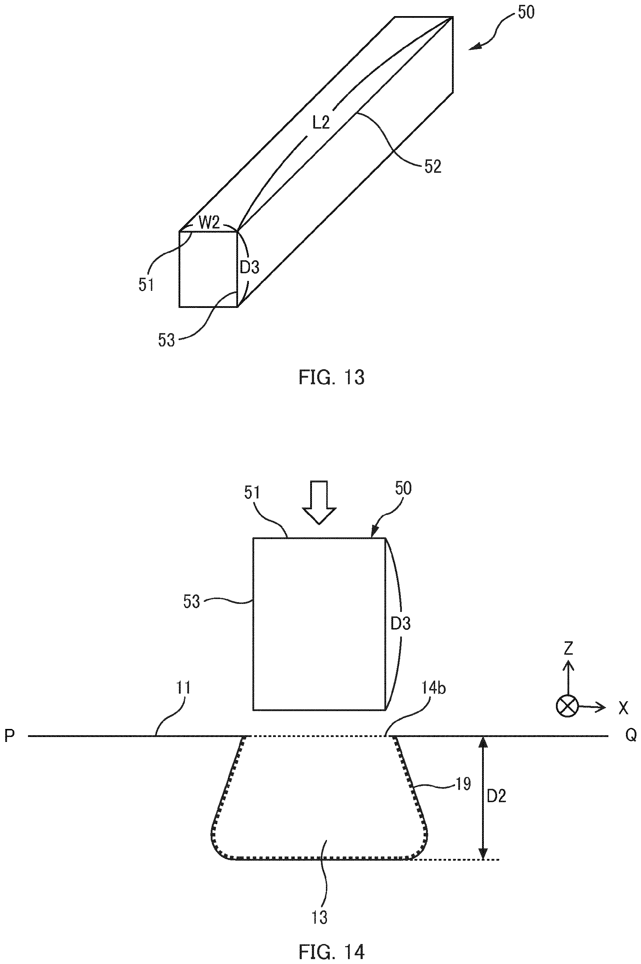

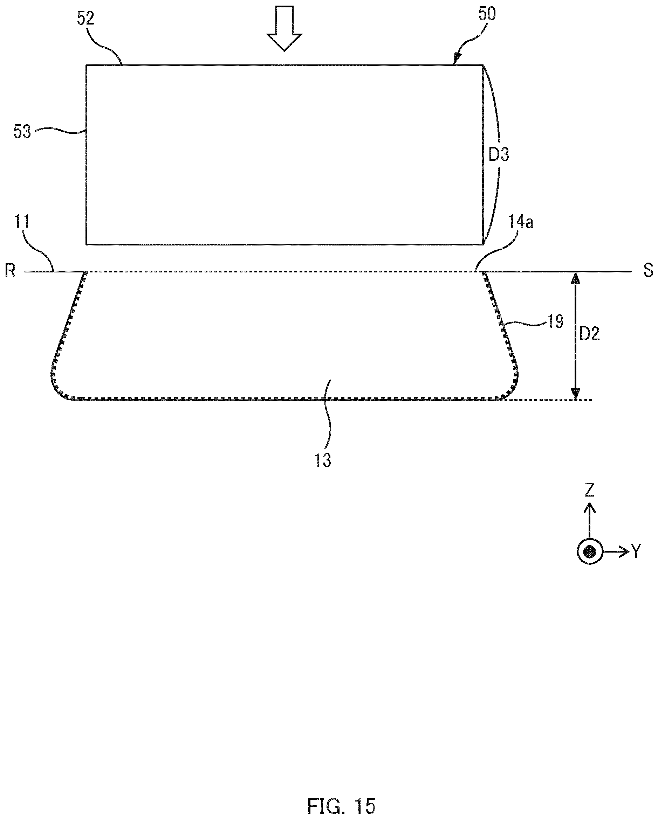

In the present embodiment, the columnar-shaped or elliptical-columnar-shaped member is used as the repair member, but other shapes may also be considered. For example, the repair member may have a rectangular parallelepiped shape. As shown in Fig. 13, the length of a side 51 in the width direction of a repair member 50 is set to W2, the length of a side 52 in the depth-direction of the repair member 50 is set to L2, and the respective W2 and L2 are matched with the side 14b in lateral direction of the cutting line 14 and the side 14a in the longitudinal direction of the cutting line 14. A side 53 in the height direction of the repair member 50 (a length D3) is made longer than the height D2 of the recess 13 (the height of the groove 13a). Then, as shown in Figs. 14 and 15, the repair member 50 is pushed into the recess 13 such that the side 51 in the width direction of the repair member 50 is adapted to the side 14b in the lateral direction of the cutting line 14, and the side 52 in the depth-direction of the repair member 50 is adapted to the side 14a in the longitudinal direction of the cutting line 14. In this case, the volume of the repair member 30 is preferably kept to be identical to the space volume of the recess 13.

The aforementioned description of the embodiment is simply for facilitating the understanding of the present invention and is not in any way to be construed as limiting the present invention. The present invention may variously be changed or altered without departing from its spirit and encompasses equivalents thereof.

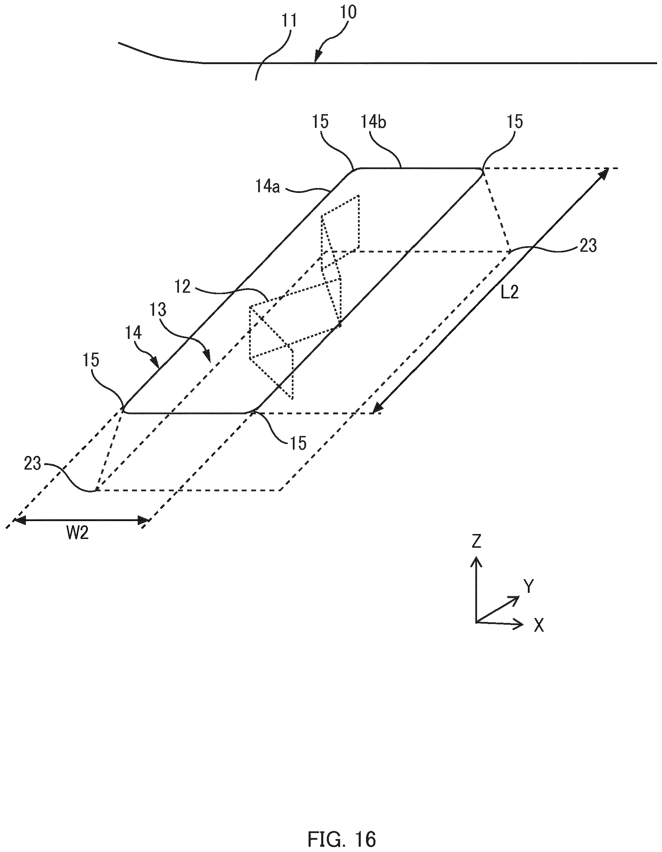

For example, in the present embodiment, the curved surfaces 21 are provided on the bottom edge of the recess 13, but the curved surfaces 21 may be omitted in order to perform the repair work more quickly. That is, as shown in Fig. 16, the bottom edge of the recess 13 may be acute-angled corner portions 23 without curved surface processing.

In the present embodiment, the recess 13 is formed so as to have the wedge-shaped cross section for both of the cross section in the crack longitudinal direction and the cross section in the crack lateral direction, but for simplification of the work, only the cross section in the crack longitudinal direction or only the cross section in the crack lateral direction may have the wedge-shaped cross section.

### Reference Signs List

10 shell member, 11 surface, 12 crack,
13 recess, 13a groove, 13b bulge,
14 cutting line,
14a side in longitudinal direction,
14b side in lateral direction,
15 corner portion, 16 side surface, 17 bottom surface,
18 edge portion, 19 flux, 21 curved surface,
22 corner, 23 acute-angled corner portion,
30 repair member, 31 end surface,
32 side in longitudinal direction,
33 side in height direction,
34 extra fill, 35 boundary, 37 outer surface,
40 bonding jig, 41 rotating portion, 50 repair member,
51 side in width direction,
52 side in depth-direction,
53 side in height direction

## Claims

1. A repair method of a cast steel member having a crack formed on a surface of the cast steel member, the repair method comprising:
recess forming to form a recess having a wedge-shaped cross section that widens in a depth direction of the cast steel member by cutting the cast steel member from the surface of the cast steel member to a predetermined depth so as to include the crack;
repair member embedding to push and embed a repair member made of a metal material more flexible than the cast steel member into the recess formed in the recess forming, the repair member being able to be diffusion bonded to the cast steel member; and
diffusion bonding the repair member to the cast steel member by heating a boundary between an exposed surface of the embedded repair member and the surface of the cast steel member.

2. The repair method of the cast steel member according to claim 1, wherein
the repair member embedding includes flux introducing to introduce a flux to the repair member or the recess, the flux reducing an interfacial tension of a contact surface of the repair member and the recess.

3. The repair method of the cast steel member according to claim 1 or 2, wherein
the diffusion bonding heats the boundary so as to make a heated region of the exposed surface of the repair member broader than a heated region of the surface of the cast steel member.

4. The repair method of the cast steel member according to any one of claims 1 to 3, wherein
the repair member embedding includes extra fill polishing to polish an extra fill formed on a surface layer of the repair member by pushing in the repair member.

5. The repair method of the cast steel member according to any one of claims 1 to 4, wherein
the repair member is selected from argentum or aluminum.
